# EUROPEAN PATENT SPECIFICATION

(11) **EP 3 933 859 B1**
(45) Date of publication and mention of the grant of the patent: **02.08.2023**
(21) Application number: 20922465.8
(22) Date of filing: 30.04.2020
(51) Int. Cl.: H01F 1/057, H01F 41/02

(54) **MAGNETIC STABILIZATION METHOD FOR PERMANENT MAGNET, MAGNETICALLY STABILIZED PERMANENT MAGNET, AND PERMANENT MAGNET MOTOR**
VERFAHREN ZUR MAGNETISCHEN STABILISIERUNG FÜR PERMANENTMAGNET, MAGNETISCH STABILISIERTER PERMANENTMAGNET UND PERMANENTMAGNETMOTOR
PROCÉDÉ DE STABILISATION MAGNÉTIQUE POUR AIMANT PERMANENT, AIMANT PERMANENT MAGNÉTIQUEMENT STABILISÉ ET MOTEUR À AIMANT PERMANENT

(43) Date of publication of application: 05.01.2022
(73) Proprietor: Huawei Technologies Co., Ltd., Longgang District Shenzhen Guangdong 518129 (CN)
(72) Inventor: LAI, Bin, Guangdong 518129 (CN); WANG, Zijing, Guangdong 518129 (CN); JING, Xiaming, Guangdong 518129 (CN)
(74) Representative: Pfenning, Meinig & Partner mbB
(86) International application number: PCT/CN2020/087971
(87) International publication number: WO 2021/217544

(56) References cited:
- EP-A2- 1 895 636
- CN-A- 101 657 864
- CN-A- 104 465 062
- JP-A- 2007 329 331
- US-A1- 2010 007 232
- US-A1- 2010 045 411
- US-A1- 2017 076 846
- US-A1- 2017 213 626
- US-A1- 2018 122 571

## Description

### TECHNICAL FIELD

This application relates to the field of permanent magnetic materials, and specifically, to a magnetic stabilization method for a permanent magnet, a permanent magnet with stable magnetization, and a permanent magnet motor.

### BACKGROUND

By virtue of excellent magnetic performance, neodymium-iron-boron permanent magnetic materials have been widely used on new energy vehicles, wind power generation, energy-saving appliances, smart manufacturing, and other fields, to promote economic development of the following concepts such as global energy saving, environmental protection, and low carbon. New development and application impose a higher requirement on permanent magnetic materials. Especially, driving motors of new energy vehicles require that the permanent magnetic materials not only has a high remanence and a maximum energy product, but also has a large coercivity. A permanent magnet of this type for a vehicle is costly because the permanent magnet has high content of a heavy rare earth (heavy rare earth, HRE) element such as dysprosium Dy or terbium Tb, making costs of the permanent magnetic material occupy over 30% those of a permanent magnet motor.

To reduce a usage quantity of heavy rare earth elements, in the past decade, a heavy rare earth diffusion technology has achieved a breakthrough and has been widely applied. In a conventional heavy rare earth element diffusion process, a layer of thin film of a heavy rare earth element such as Dy or Tb with an even thickness or a layer of a compound thin film with an even thickness that is rich in a Dy or Tb element is formed on a surface of a neodymium-iron-boron substrate by using a physical or chemical method. Then high-temperature heat treatment is performed on the thin film to make the heavy rare earth element such as Dy or Tb diffuse from the surface of the neodymium-iron-boron substrate into the neodymium-iron-boron substrate along a grain boundary, thereby improving an overall coercivity of a neodymium-iron-boron permanent magnet. In this method, a coating area is relatively large, and consequently a large quantity of heavy rare earth elements needs to be consumed.

US 2017/213626 A1 discusses a bulk high performance permanent magnet comprising a neodymium-iron-boron core having an outer surface, and a coercivity-enhancing element residing on at least a portion of said outer surface, with an interior portion of said neodymium-iron-boron core not having said coercivity-enhancing element therein.

US 2018/122571 A1 discusses a method for producing an RFeB-based magnet, in which not only a grain boundary diffusion treatment can be performed so that a heavy rare earth element R^{H} is caused to penetrate in the whole base material (magnet) as evenly as possible to thereby produce a magnet that is homogeneous as a whole but also the magnet can be produced without wasting the heavy rare earth element R^{H}.

EP 1 895 636 A2 discusses a permanent magnet rotating machine comprising an R-Fe-B permanent magnet obtained by increasing the coercive force of a sintered magnet body while suppressing a decline of remanence (or residual flux density).

US 2010/007232 A1 discusses a sintered magnet in which a fluorine-containing phase is formed at a grain boundary or to a portion in a grain to an Fe type magnet material for improving the heat resistance of magnets of Fe-type including an R-Fe (R: rare earth element) type magnets.

US 2010/045411 A1 discusses providing an R-T-B based sintered magnet including a region with high remanence Bᵣ and a region with high coercivity H_{cJ} at predetermined locations, without using any adhesive.

US 2017/076846 A1 discusses an R-T-B based sintered magnet which includes a first main surface and a first side surface.

### SUMMARY

Embodiments of this application provide a magnetic stabilization method for a permanent magnet, a permanent magnet with stable magnetization, and a permanent magnet motor, to improve an overall coercivity of a permanent magnet by using a relatively small amount of heavy rare earth (heavy rare earth, HRE) elements.

A first aspect of this application provides a magnetic stabilization method for a permanent magnet, as defined in independent claim 1.

In the first aspect, the permanent magnet substrate may be a substrate made of a neodymium-iron-boron material. The magnetic stabilization material may be a pure metal, may be an alloy, or may be slurry obtained by mixing a compound including the heavy rare earth element with an organic solvent. The heavy rare earth element may include dysprosium Dy, terbium Tb, or another element. The permanent magnet substrate has a magnetization direction. The first face is perpendicular to the magnetization direction. Using a permanent magnet substrate in a structure of a cuboid as an example, the magnetization direction is usually a height direction, and the first face is usually an upper surface or a lower surface of the cuboid. Using a permanent magnet substrate in a structure of a cylinder as an example, the magnetization direction is also a height direction, and the first face is usually an upper surface or a lower surface of the cylinder. The first direction is a direction perpendicular to the magnetization direction. Using the permanent magnet substrate in the structure of a cuboid as an example, the direction perpendicular to the magnetization direction may be a length direction or a width direction of the cuboid. A physical sputtering method may be used to perform processing on the first face to form the thin film. For example, the heavy rare earth element is bombarded by using a target material, to form a thin film on the first face of the permanent magnet substrate. Alternatively, a chemical coating method may be used to coat slurry on the first face. Alternatively, electroplating, electro-deposition, or another method may be used to form a thin film on the first face. In a diffusion processing process, the permanent magnet substrate may be placed in a vacuum furnace to undergo heat treatment at a temperature of 900 Celsius degrees for 16 hours. After the diffusion processing, the permanent magnet substrate may further undergo heat treatment at a temperature of 450 Celsius degrees for 8 hours. Certainly, a specific temperature value and time length are not limited to the 900 degrees and 16 hours, or 450 degrees and 8 hours enumerated herein, and may alternatively be other values, provided that the diffusion processing of the heavy rare earth element can be completed. It can be learned from the first aspect that in a magnetic stabilization process of the permanent magnet, the first-face thin film has a varying concentration of the heavy rare earth element on the first face. In this way, in the permanent magnet with stable magnetization obtained after thin film diffusion, the heavy rare earth element dispersed along the direction perpendicular to the magnetization direction has a varying concentration. In this case, in the first aspect, on a premise that the permanent magnet with stable magnetization meets different requirements on resistance to demagnetization at different positions, the thin film is formed on only the first face. This further reduces a usage amount of the heavy rare earth element and reduces costs of the permanent magnet with stable magnetization. In addition, on-demand customization of the permanent magnet with stable magnetization can be implemented by controlling the concentration of the heavy rare earth element on the first face.

In a possible implementation of the first aspect, on the first face, the thin film thickness of the first-face thin film first decreases and then increases from one end to the other end of the first face along the first direction.

In this possible implementation, the first-face thin film usually has a uniform concentration of the heavy rare earth element, but the first-face thin film lias a varying thin film thickness. That the thin film thickness first decreases and then increases from one end to the other end of the first face along the first direction may be a gradient decrease with a uniform scale followed by a gradient increase, or may be a continuous decrease followed by a continuous increase. A turning point from the decrease to the increase is usually a center line of the first face. This can be construed as follows: The thin film thickness assumes a gradient decrease tendency from one end of the first face to the center line, and the thin film thickness assumes a gradient increase tendency from the center line to the other end of the first face. Corresponding to the concentration of the heavy rare earth element, a coercivity is also larger at the two ends and smaller in the middle. This can exactly meet a requirement that higher resistance to demagnetization is required at an edge of the permanent magnet with stable magnetization and lower resistance to demagnetization is required at a center of the permanent magnet with stable magnetization.

In a possible implementation of the first aspect, on the first face, the concentration of the heavy rare earth element in the first-face thin film first decreases and then increases from one end to the other end of the first face along the first direction.

In this possible implementation, the first-face thin film may have a uniform thin film thickness, but concentrations of the heavy rare earth element are not exactly the same in different regions of the first-face thin film. That the concentration of the heavy rare earth element in the first-face thin film first decreases and then increases may be a gradient decrease with a uniform scale followed by a gradient increase with a uniform scale, or may be a continuous decrease followed by a continuous increase. A turning point from the decrease to the increase is usually a center line of the first face. This can be construed as follows: The concentration of the heavy rare earth element assumes a gradient decrease tendency from one end of the first face to the center line, and the concentration of the heavy rare earth element assumes a gradient increase tendency from the center line to the other end of the first face. Corresponding to the concentration of the heavy rare earth element, a coercivity is also larger at the two ends and smaller in the middle. This can exactly meet a requirement that higher resistance to demagnetization is required at an edge of the permanent magnet with stable magnetization and lower resistance to demagnetization is required at a center of the permanent magnet with stable magnetization.

In a possible implementation of the first aspect, on the first face, the first-face thin film is divided into a plurality of thin film regions based on the thin film thickness or the concentration of the heavy rare earth element, where the plurality of thin film regions have different thin film thicknesses, or the plurality of thin film regions have different concentrations of the heavy rare earth element.

In this possible implementation, the thin film on the first face may include a plurality of thin film regions. These thin film regions may be consecutive or may be inconsecutive. Different thin film regions have different thin film thicknesses, or different thin film regions have different concentrations of the heavy rare earth element. In this possible implementation, the thin film regions can be used to facilitate control over a variation of the thin film thickness or over a variation of the concentration of the heavy rare earth element.

In a possible implementation of the first aspect, along the first direction, a thickness of a middle portion of the first-face thin film has a lower thickness in a middle portion than in regions at two ends, or has a lower concentration of the heavy rare earth element in the middle portion than in the regions at the two ends.

In a possible implementation of the first aspect, the plurality of faces further include a second face, the second face is perpendicular to the magnetization direction, and the second face and the first face are respectively located on two opposite sides of the permanent magnet substrate. The magnetic stabilization method further includes: processing the magnetic stabilization material on the second face to form a second-face thin film, where the second-face thin film has a varying thin film thickness in distribution along the first direction, or the second-face thin film has a varying concentration of the heavy rare earth element in distribution along the first direction; and performing diffusion processing of the heavy rare earth element on the permanent magnet substrate on which the thin film is formed on the second face.

In this possible implementation, the first face and the second face that are perpendicular to the magnetization direction are opposite faces. These two faces are located on the two opposite sides of the permanent magnet substrate. Usually, the first face and the second face are also two faces parallel to each other. Using a permanent magnet substrate in a structure of a cuboid as an example, the first face and the second face are usually an upper surface and a lower surface of the cuboid. Using a permanent magnet substrate in a structure of a cylinder as an example, the first face and the second face are usually an upper surface and a lower surface of the cylinder. For processes of forming the thin film on the second face and diffusion processing, reference may be made to the processes of forming the thin film on the first face and diffusion processing of the first-face thin film in the first aspect, to facilitate understanding. It can be learned from this possible implementation that a thin film is formed on both the first face and the second face. In this way, the heavy rare earth element can be included everywhere inside a permanent magnet with stable magnetization obtained by using the permanent magnet substrate with a relatively large thickness.

In a possible implementation of the first aspect, the foregoing step of processing the magnetic stabilization material on the second face to form a second-face thin film includes: after processing the magnetic stabilization material on the first face to obtain the first-face thin film, flipping the permanent magnet substrate by 180° to the second face, and then processing the permanent magnet substrate on the second face to form the second-face thin film.

In a possible implementation of the first aspect, a thickness variation or concentration variation of the second-face thin film in the distribution along the first direction is consistent with or the same as a thickness variation or concentration variation of the first-face thin film in the distribution along the first direction.

In this possible implementation, that the thickness variation of the thin film thickness of the second-face thin film is consistent with that of the thin film thickness of the first-face thin film along the first direction means: Thin film thicknesses at opposite positions on the first face and the second face correspond to each other in terms of variation position, variation tendency, or variation amplitude. For example, if a thin film thickness of the first-face thin film at a position 1 on the first face is greater than a thin film thickness at a position 2 on the first face, a thin film thickness of the second-face thin film at a position that is on the second face and that corresponds to the position 1 is greater than a thin film thickness at a position that is on the second face and that corresponds to the position 2. That the thickness variations are the same means: The thin film thicknesses on the first face and the second face are the same in terms of variation position, variation tendency, or variation amplitude. That the concentration variation of the concentration of the heavy rare earth element in the second-face thin film is consistent with that of the concentration of the heavy rare earth element in the first-face thin film along the first direction means: Concentrations of the heavy rare earth element at opposite positions on the first face and the second face are consistent with each other, which may alternatively be construed as corresponding to each other, in terms of variation position, variation tendency, or variation amplitude. For example, if a concentration of the heavy rare earth element in the first-face thin film at a position 1 on the first face is greater than a concentration of the heavy rare earth element at a position 2 on the first face, a concentration of the heavy rare earth element in the second-face thin film at a position that is on the second face and that corresponds to the position 1 is greater than a concentration at a position that is on the second face and that corresponds to the position 2. That the concentration variations are the same means: The concentrations of the heavy rare earth element on the first face and the second face are the same in terms of variation position, variation tendency, or variation amplitude. It can be learned from this possible implementation that the thickness variation or concentration variation of the thin film on the first face is consistent with or the same as the thickness variation or concentration variation of the thin film on the second face, so that concentrations of the heavy rare earth element in the obtained permanent magnet with stable magnetization can be distributed symmetrically along a center line in a length direction. This helps improve an overall coercivity of the permanent magnet with stable magnetization.

In a possible implementation of the first aspect, a distance between the first face and the second face is H, and H ≤ 10 millimeters.

A height H in the magnetization direction meets H ≤ 10 millimeters. This is more helpful for the heavy rare earth element to diffuse into a center of the permanent magnet substrate during thin film diffusion.

In a possible implementation of the first aspect, content of the heavy rare earth element in the permanent magnet substrate is zero.

In this possible implementation, the permanent magnet substrate may be a substrate with zero rare earth. In other words, the permanent magnet substrate includes no heavy rare earth element. This can reduce costs of the permanent magnet substrate.

In a possible implementation of the first aspect, the magnetic stabilization material is a pure metal, and the pure metal includes at least one of a dysprosium Dy element or a terbium Tb element.

In a possible implementation of the first aspect, the magnetic stabilization material is an alloy, and the alloy includes at least one of a dysprosium Dy element or a terbium Tb element and at least one of the following elements: copper Cu, cobalt Co, aluminum Al, calcium Ga, niobium Nb, titanium Ti, vanadium V, molybdenum Mo, and silicon Si.

In a possible implementation of the first aspect, the magnetic stabilization material is slurry, and the slurry includes at least one of a compound including a dysprosium element or a compound including a terbium element, and an organic solvent. The compound including the dysprosium element includes at least one of dysprosium fluoride, dysprosium oxide, or dysprosium hydride. The compound including the terbium element includes at least one of terbium fluoride, terbium oxide, or terbium hydride. The organic solvent includes at least one of an alcohol solvent, a

In a possible implementation of the first aspect, an alloy component of the permanent magnet substrate includes a rare earth metal RE, iron Fe, boron B, or a transition metal M. RE is at least one of the following elements: neodymium Nd, praseodymium Pr, dysprosium Dy, lanthanum La, cerium Ce, yttrium Y, holmium Ho, terbium Tb, or gadolinium Gd. M is at least one of the following elements: cobalt Co, copper Cu, niobium Nb, calcium Ga, aluminum Al, zinc Zn, nickel Ni, silicon Si, zirconium Zr, molybdenum Mo, vanadium V, or titanium Ti.

A second aspect of this application provides a permanent magnet with stable magnetization as defined in independent claim 11. The permanent magnet with stable magnetization has one magnetization direction. The permanent magnet with stable magnetization includes a heavy rare earth element. The heavy rare earth element is dispersed in the permanent magnet with stable magnetization and has a varying concentration along a direction perpendicular to the magnetization direction.

In the second aspect, a permanent magnet may be used on new energy vehicles, wind power generation, energy-saving appliances, smart manufacturing, and other fields. The permanent magnet may be a neodymium-iron-boron permanent magnet. The permanent magnet has one magnetization direction. A first face and a second face that are perpendicular to the magnetization direction are opposite faces. Usually, the first face and the second face are also two faces parallel to each other. Using a permanent magnet in a structure of a cuboid as an example, the magnetization direction is usually a height direction, and the first face and the second face are usually an upper surface and a lower surface of the cuboid. Using a permanent magnet in a structure of a cylinder as an example, the magnetization direction is also a height direction, and the first face and the second face are usually an upper surface and a lower surface of the cylinder. The heavy rare earth element may include dysprosium Dy, terbium Tb, or another element. That the heavy rare earth element in the permanent magnet with stable magnetization has varying concentration distribution along the direction perpendicular to the magnetization direction can also be construed as follows: On any parallel face parallel to the first face and the second face, concentrations of the heavy rare earth element in different regions are not exactly the same, to meet different requirements on resistance to demagnetization at different positions of the permanent magnet.

In a possible implementation of the second aspect, in the permanent magnet with stable magnetization, the concentration of the heavy rare earth element first decreases and then increases along the direction perpendicular to the magnetization direction. This can also be construed as follows: On any parallel face, a concentration of the heavy rare earth element first decreases and then increases from one end to the other end of the parallel face along a first direction. The first direction is a direction, on the parallel face, perpendicular to the magnetization direction.

In this possible implementation, the first direction is a direction perpendicular to the magnetization direction. Using a permanent magnet substrate in a structure of a cuboid as an example, the direction perpendicular to the magnetization direction may be a length direction or a width direction of the cuboid. That the concentration of the heavy rare earth element first decreases and then increases may be a gradient decrease with a uniform scale followed by a gradient increase with a uniform scale, or may be a continuous decrease followed by a continuous increase. A turning point from the decrease to the increase is usually a center line of a parallel face. This can be construed as follows: The concentration of the heavy rare earth element assumes a gradient decrease tendency from one end of the parallel face to the center line, and the concentration of the heavy rare earth element assumes a gradient increase tendency from the center line to the other end of the parallel face. In this way, the concentration of the heavy rare earth element on the parallel face is higher at two ends and lower in the middle. Corresponding to the concentration of the heavy rare earth element, a coercivity is also larger at the two ends and smaller in the middle. This can exactly meet a requirement that higher resistance to demagnetization is required at an edge of the permanent magnet with stable magnetization and lower resistance to demagnetization is required at a center of the permanent magnet with stable magnetization.

In a possible implementation of the second aspect, along the direction perpendicular to the magnetization direction, the permanent magnet with stable magnetization has a lower concentration of the heavy rare earth element in a middle portion than in regions at two ends.

In a possible implementation of the second aspect, the heavy rare earth element includes at least one of a dysprosium Dy element or a terbium Tb element.

In a possible implementation of the second aspect, the heavy rare earth element includes at least one of a Dy element or a terbium Tb element and at least one of the following elements: copper Cu, cobalt Co, aluminum Al, calcium Ga, niobium Nb, titanium Ti, vanadium V, molybdenum Mo, or silicon Si.

In a possible implementation of the second aspect, the permanent magnet with stable magnetization has a first face and a second face that are perpendicular to the magnetization direction, the first face and the second face are respectively located on two opposite sides of the permanent magnet with stable magnetization, a distance between the first face and the second face is H, and H ≤ 10 millimeters.

In this possible implementation, a height H in the magnetization direction meets H ≤ 10 millimeters. This is more helpful for the heavy rare earth element to diffuse into a center of a permanent magnet substrate during thin film diffusion.

In a possible implementation of the second aspect, H ≤ 5 millimeters.

In this possible implementation, a height H in the magnetization direction meets H ≤ 5 millimeters. This helps save the heavy rare earth element.

A third aspect of this application provides a permanent magnet motor, including a rotor and a stator as defined in independent claim 16. The rotor includes a rotor core and a permanent magnet with stable magnetization that is inserted into a slot of the rotor core. The permanent magnet with stable magnetization is the permanent magnet with stable magnetization according to any one of the second aspect or the possible implementations of the second aspect.

### BRIEF DESCRIPTION OF DRAWINGS

FIG. 1 is a schematic diagram of an embodiment of a magnetic stabilization method for a permanent magnet according to an embodiment of this application;
FIG. 2 is a schematic structural diagram of a permanent magnet substrate according to an embodiment of this application;
FIG. 3 is an example schematic diagram of a magnetic stabilization method for a permanent magnet which is not part of the invention;
FIG. 4 is another example schematic diagram of a magnetic stabilization method for a permanent magnet which is not part of the invention;
FIG. 5 is another example schematic diagram of a magnetic stabilization method for a permanent magnet according to an embodiment of this application;
FIG. 6 is another example schematic diagram of a magnetic stabilization method for a permanent magnet which is not part of the invention;
FIG. 7 is another example schematic diagram of a magnetic stabilization method for a permanent magnet according to an embodiment of this application;
FIG. 8 is a schematic diagram of concentration distribution of a permanent magnet with stable magnetization according to an embodiment of this application;
FIG. 9 is a schematic diagram of comparison between a coercivity design and a test result according to an embodiment of this application; and
FIG. 10 is another schematic diagram of comparison between a coercivity design and a test result according to an embodiment of this application.

### DESCRIPTION OF EMBODIMENTS

Embodiments of this application provide a magnetic stabilization method for a permanent magnet, a permanent magnet with stable magnetization, and a permanent magnet motor, to improve an overall coercivity of a permanent magnet by using a relatively small amount of heavy rare earth (heavy rare earth, HRE) elements. Detailed descriptions are separately provided below.

In the specification, claims, and accompanying drawings of this application, the terms "first", "second", and the like are intended to distinguish between similar objects but do not necessarily indicate a specific order or sequence. It should be understood that the data termed in such a way are interchangeable in proper circumstances so that the embodiments described herein can be implemented in other orders than the order illustrated or described herein.

Processing the magnetic stabilization material on a first /second face to form a thin film, where the thin film has a varying thin film thickness in distribution along a first direction is an alternative which is not part of the invention.

Permanent magnets are widely used on new energy vehicles, wind power generation, energy-saving appliances, smart manufacturing, and other fields. For example, a permanent magnet motor in a new energy vehicle needs to include a permanent magnet. The following describes the magnetic stabilization method for a permanent magnet, the permanent magnet with stable magnetization, and the permanent magnet motor provided in the embodiments of this application.

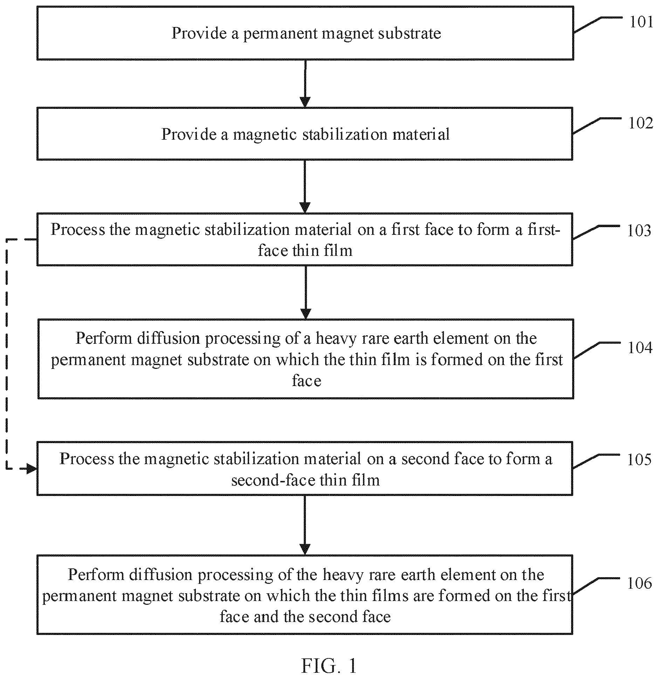

FIG. 1 is a schematic diagram of an embodiment of a magnetic stabilization method for a permanent magnet according to an embodiment of this application.

As shown in FIG. 1, the embodiment of the magnetic stabilization method for a permanent magnet provided in this application includes the following steps.

101. Provide a permanent magnet substrate.

The permanent magnet substrate includes a plurality of faces and one magnetization direction. The plurality of faces include a first face and a second face. The first face and the second face are opposite faces perpendicular to the magnetization direction. In other words, the first face and the second face are respectively located on two opposite sides of the permanent magnet substrate.

For example, the permanent magnet substrate is a neodymium-iron-boron substrate. The permanent magnet substrate may alternatively be another substrate similar to a neodymium-iron-boron material.

The neodymium-iron-boron substrate may be manufactured by using a sintering processing. An average grain size may range from 1 micrometer (µm) to 10 micrometers, and a coercivity of the neodymium-iron-boron substrate is usually greater than or equal to 1410 (kiloampere/meter) kA/m. A coercivity (coercivity) is an indicator used to evaluate quality of a permanent magnet. After magnetization of a magnetic material is saturated, when an external magnetic field returns to zero, a magnetic induction B of the magnetic material does not return to zero, and the magnetic induction can return to zero only by adding a magnetic field with a specific magnitude to an opposite direction of the external magnetic field. This magnetic field is referred to as a coercive magnetic field, which is also referred to as a coercivity.

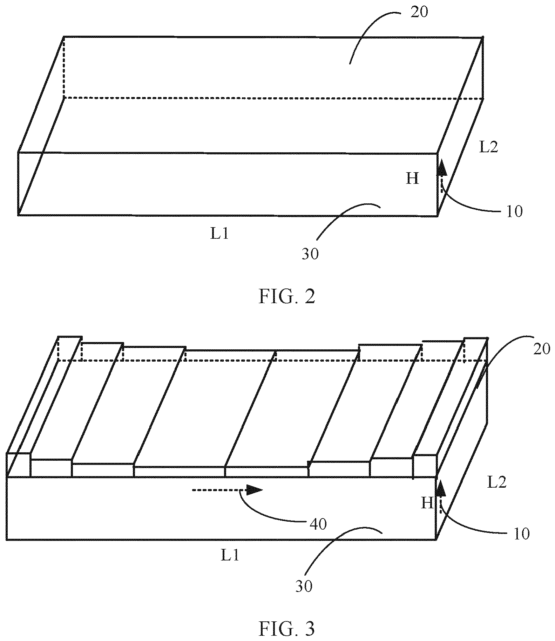

After undergoing the sintering processing, the neodymium-iron-boron substrate can be processed into a block-shaped substrate. The processed block-shaped substrate undergoes alkaline cleaning, acid cleaning, washing by using deionized water, and drying, and then can be used as the permanent magnet substrate in this embodiment of this application. For the permanent magnet substrate in this embodiment of this application, reference may be made to a structure shown in FIG. 2 to facilitate understanding. As shown in FIG. 2, the permanent magnet substrate in a shape of a cuboid has a length of L1, a width of L2, and a height of H. With reference to the permanent magnet substrate in the shape of a cuboid shown in FIG. 2, the height (H) in a bottom-up direction may be used as a magnetization direction 10 of the permanent magnet substrate, and an upper surface and a lower surface that are perpendicular to the height may be respectively used as a first face 20 and a second face 30.

Optionally, content of a heavy rare earth element in the permanent magnet substrate is zero. Such a substrate may also be referred to as a substrate with zero rare earth. In other words, the permanent magnet substrate includes no heavy rare earth element. This can reduce costs of the permanent magnet substrate.

102. Provide a magnetic stabilization material.

The magnetic stabilization material includes a heavy rare earth (heavy rare earth, HRE) element.

The magnetic stabilization material may be a pure metal, may be an alloy, or may be slurry obtained by mixing a compound including the heavy rare earth element with an organic solvent.

The magnetic stabilization material is a pure metal. The pure metal includes at least one of a dysprosium Dy element or a terbium Tb element.

The magnetic stabilization material is an alloy. The alloy includes at least one of a dysprosium Dy element or a terbium Tb element and at least one of the following elements: copper Cu, cobalt Co, aluminum Al, calcium Ga, niobium Nb, titanium Ti, vanadium V, molybdenum Mo, or silicon Si.

The magnetic stabilization material is slurry; The slurry includes at least one of a compound including a dysprosium element or a compound including a terbium element, and an organic solvent. The compound including the dysprosium element includes at least one of dysprosium fluoride, dysprosium oxide, or dysprosium hydride. The compound including the terbium element includes at least one of terbium fluoride, terbium oxide, or terbium hydride. The organic solvent includes at least one of an alcohol solvent, a ketone solvent, or an ester solvent.

A method for manufacturing slurry including a terbium element may be as follows: Raw materials such as terbium fluoride powder, ethyl acetate, and a glue that are used for manufacturing are mixed, and then the raw materials are stirred. In this way, the slurry including the terbium element can be obtained. An average granularity of the terbium fluoride powder may be 5 micrometers (µm). A weight of the ethyl acetate may be several times (for example, 3 times) that of the terbium fluoride powder. A concentration of the glue may be 10 wt%, and wt% represents a percentage by weight. Certainly, these are merely examples. Weights and concentrations of the several raw materials may alternatively be other values.

A method for manufacturing slurry including a dysprosium element may be as follows: Raw materials such as dysprosium fluoride, ethyl acetate, and a glue that are used for manufacturing are mixed, and then the raw materials are stirred. In this way, the slurry including the dysprosium element can be obtained. An average granularity of the dysprosium fluoride powder may be 5 micrometers. A weight of the ethyl acetate may be 3.5 times that of the dysprosium fluoride powder. A concentration of the glue may be 11 wt%. Certainly, these are merely examples. Weights and concentrations of the several raw materials may alternatively be other values.

103. Process the magnetic stabilization material on the first face to form a first-face thin film.

In distribution of the first-face thin film on the first face along a first direction. Thin film thicknesses in different regions are not exactly the same. In other words, the first-face thin film has a varying thin film thickness on the first face 20 along the first direction. Alternatively, concentrations of the heavy rare earth element in different regions of the first-face thin film are not exactly the same. In other words, the first-face thin film has a varying concentration of the heavy rare earth element in distribution on the first face 20 along the first direction. The first direction is a direction that is on the first face 20 and that is perpendicular to the magnetization direction 10.

The first-face thin film has a varying thin film thickness on the first face 20. Reference may be made to a schematic diagram, shown in FIG. 3, of a permanent magnet substrate on which a first-face thin film is formed, to facilitate understanding. As shown in FIG. 3, a first direction 40 may be a direction from one end to the other end of a length L1 on the first face 20. Certainly, the first direction 40 is not limited on the first face 20, and each direction the same as the direction can be referred to as the first direction. The first-face thin film has a varying thin film thickness on the first face 20, which may be shown in FIG. 3. On the first face 20, the thin film thickness first decreases and then increases from one end to the other end along a length direction. The variation process may present a gradient variation. In other words, the thin film thickness first decreases along a gradient and then increases along a gradient from the one end to the other end. Regions with different thin film thicknesses shown in FIG. 3 are contiguous. In practice, the regions may alternatively be spaced apart. When the regions are slightly spaced apart, an operation is relatively easy when the first-face thin film is formed, and a magnetic stabilization material may also be saved. Regions of different thicknesses on the first-face thin film each may also be referred to as a thin film region. The thin film regions are obtained through division based on the thin film thickness.

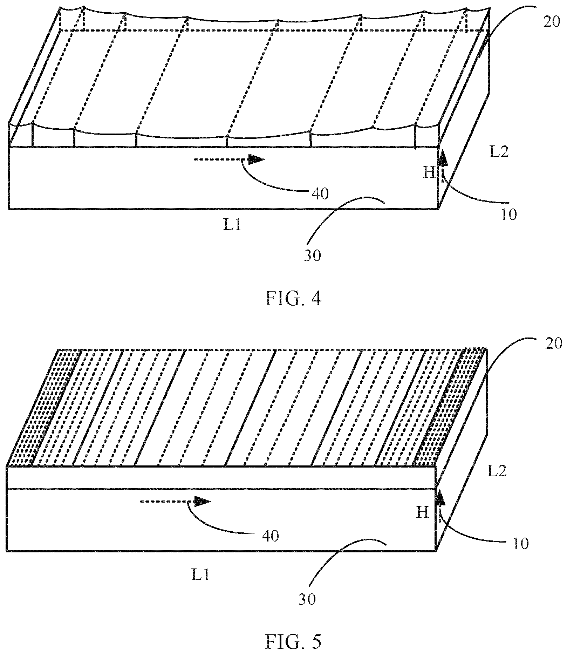

In addition, the first-face thin film shown in FIG. 3 may alternatively be continuous. For a specific implementation, reference may be made to another schematic diagram, shown in FIG. 4, of a permanent magnet substrate on which a first-face thin film is formed, to facilitate understanding. As shown in FIG. 4, along a length direction L of the first face 20, the first-face thin film on the first face 20 has a largest thin film thickness on two sides and has a smallest thin film thickness at a middle position.

The first-face thin film has a varying concentration of the heavy rare earth element on the first face. FIG. 5 is a schematic diagram of a permanent magnet substrate on which a first-face thin film is formed. As shown in FIG. 5, the first-face thin film has a uniform thin film thickness, but the first-face thin film has a varying concentration of a heavy rare earth element.

In addition, the first-face thin film shown in FIG. 5 is continuous. Optionally, regions of different concentrations of the heavy rare earth element in the first-face thin film each may also be referred to as a thin film region. The thin film regions are obtained through division based on concentrations of the heavy rare earth element.

It should be noted that, in FIG. 3 to FIG. 5, quantities of regions on the first face are merely examples. In practice, a quantity of regions on the first face may be determined based on a requirement.

A physical sputtering method may be used to perform processing on the first face to form the first-face thin film. For example, the heavy rare earth element is bombarded by using a target material, to form a thin film on the first face of the permanent magnet substrate. Alternatively, a chemical coating method may be used to coat slurry on the first face. Alternatively, electroplating, electro-deposition, or another method may be used to form a thin film on the first face.

104. Perform diffusion processing of the heavy rare earth element on the permanent magnet substrate on which the thin film is formed on the first face.

In a diffusion processing process, the permanent magnet substrate may be placed in a vacuum furnace to undergo heat treatment at a temperature of 900 Celsius degrees for 16 hours. After the diffusion processing, the permanent magnet substrate may further undergo heat treatment at a temperature of 450 Celsius degrees for 8 hours. Certainly, a specific temperature value and time length are not limited to the 900 degrees and 16 hours, or 450 degrees and 8 hours enumerated herein, and may alternatively be other values, provided that the diffusion processing of the heavy rare earth element can be completed.

A permanent magnet with stable magnetization can be obtained after the heavy rare earth element is diffused.

In this embodiment of this application, in a magnetic stabilization process of the permanent magnet, the first-face thin film has a varying thin film thickness or a varying concentration of the heavy rare earth element on the first face. In this way, in the permanent magnet with stable magnetization obtained after thin film diffusion, the heavy rare earth element dispersed along the direction perpendicular to the magnetization direction has a varying concentration. In this case, in this embodiment of this application, on a premise that the permanent magnet with stable magnetization meets different requirements on resistance to demagnetization at different positions, the thin film is formed on only the first face. This further reduces a usage amount of the heavy rare earth element and reduces costs of the permanent magnet with stable magnetization. In addition, on-demand customization of the permanent magnet with stable magnetization can be implemented by controlling the thin film thickness or the concentration of the heavy rare earth element on the first face.

The permanent magnet with stable magnetization obtained by forming the first-face thin film on only the first face and performing diffusion processing usually has a relatively small thickness. For some permanent magnet substrates with relatively large thicknesses, magnetic stabilization may be performed by using the following solution.

After step 103, step 104 is no longer performed. Instead, the permanent magnet substrate is flipped by 180° to the second face, and then step 105 and step 106 in FIG. 1 are performed.

105. Process the magnetic stabilization material on the second face to form a second-face thin film.

The second-face thin film has a varying thin film thickness in distribution along the first direction, or the second-face thin film has a varying concentration of the heavy rare earth element in distribution along the first direction.

Optionally, a thickness variation or concentration variation of the second-face thin film in the distribution along the first direction is consistent with or same as a thickness variation or concentration variation of the first-face thin film in the distribution along the first direction.

That the thickness variation of the thin film thickness of the second-face thin film is consistent with that of the thin film thickness of the first-face thin film along the first direction means: Thin film thicknesses at opposite positions on the first face and the second face correspond to each other in terms of variation position, variation tendency, or variation amplitude. For example, if a thin film thickness of the first-face thin film at a position 1 on the first face is greater than a thin film thickness at a position 2 on the first face, a thin film thickness of the second-face thin film at a position that is on the second face and that corresponds to the position 1 is greater than a thin film thickness at a position that is on the second face and that corresponds to the position 2. That the thickness variations are the same means: The thin film thicknesses on the first face and the second face are the same in terms of variation position, variation tendency, or variation amplitude. That the concentration variation of the concentration of the heavy rare earth element in the second-face thin film is consistent with that of the concentration of the heavy rare earth element in the first-face thin film along the first direction means: Concentrations of the heavy rare earth element at opposite positions on the first face and the second face are consistent with each other, which may alternatively be construed as corresponding to each other, in terms of variation position, variation tendency, or variation amplitude. For example, if a concentration of the heavy rare earth element in the first-face thin film at a position 1 on the first face is greater than a concentration of the heavy rare earth element at a position 2 on the first face, a concentration of the heavy rare earth element in the second-face thin film at a position that is on the second face and that corresponds to the position 1 is greater than a concentration at a position that is on the second face and that corresponds to the position 2. That the concentration variations are the same means: The concentrations of the heavy rare earth element on the first face and the second face are the same in terms of variation position, variation tendency, or variation amplitude.

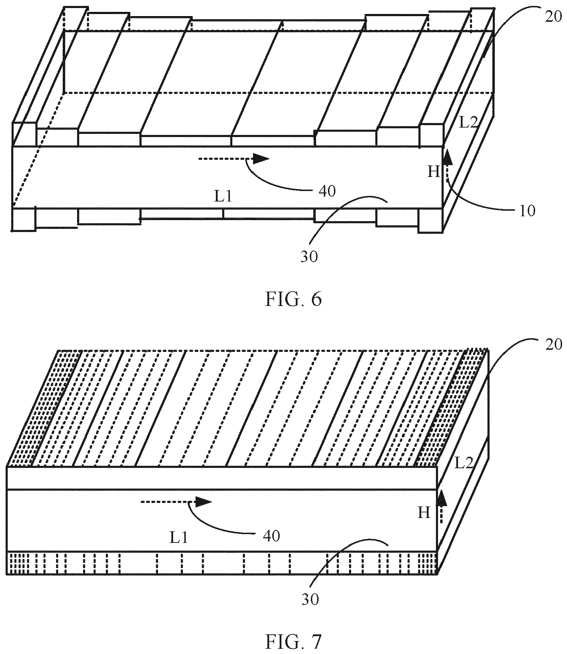

In specific implementation, that the thickness variations on the first face and the second face are consistent with each other may be that the thin film thicknesses on the first face and the second face are symmetric relative to the permanent magnet substrate. As shown in FIG. 6, a thin film thickness assumes a gradient decrease from two sides to the middle along a length direction of a second face 30. A gradient variation tendency, variation position, and variation amplitude of the second-face thin film are basically consistent with a gradient variation tendency, variation position, and variation amplitude of the first-face thin film. That the thin film thickness of the second-face thin film is consistent with the thin film thickness of the first-face thin film in distribution along the first direction means: Thin film thicknesses at opposite positions on the first face and the second face are basically the same. For example, a thin film thickness of a thin film region that is 0 to 2 millimeters away from a left end of the first face is 200 micrometers. In this case, a thin film thickness of a thin film region that is 0 to 2 millimeters away from a left end of the second face is also basically 200 micrometers.

That the concentration variations on the first face and the second face are consistent with each other means: Concentrations of the heavy rare earth element at opposite positions on the first face and the second face are basically the same in terms of variation position, variation tendency, or variation amplitude. FIG. 7 is a schematic diagram of a permanent magnet substrate on which a second-face thin film is formed. As shown in FIG. 7, the second-face thin film has a same thickness, but the second-face thin film has a varying concentration of a heavy rare earth element. In addition, concentrations of the heavy rare earth element in regions of the second-face thin film are basically the same as concentrations of the heavy rare earth element in regions of the first-face thin film. For example, a concentration of the heavy rare earth element in a thin film region that is 0 to 2 millimeters away from a left end of the first face is 0.75 wt% (wt% represents a percentage by weight). In this case, a concentration of the heavy rare earth element in a thin film region that is 0 to 2 millimeters away from a left end of the second face is 0.75 wt%.

A physical sputtering method may be used to perform processing on the second face to form the second-face thin film. For example, the heavy rare earth element is bombarded by using a target material, to form a thin film on the second face of the permanent magnet substrate. Alternatively, a chemical coating method may be used to coat slurry on the second face after the slurry is coated on the first face and dried. Alternatively, electroplating, electro-deposition, or another method may be used to form a thin film on the second face.

106. Perform diffusion processing of the heavy rare earth element on the permanent magnet substrate on which the thin films are formed on the first face and the second face.

A permanent magnet with stable magnetization is also obtained after step 106.

For a diffusion processing process, reference may be made to corresponding content in step 104, to facilitate understanding.

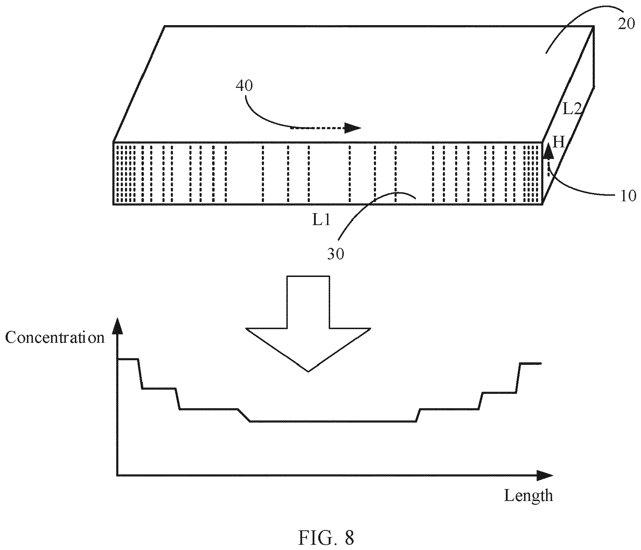

In this embodiment of this application, a thin film thickness corresponds to a concentration of the heavy rare earth element in the permanent magnet with stable magnetization after the diffusion. In other words, for a region with a large thin film thickness, a concentration of the heavy rare earth element at a position that is in the permanent magnet with stable magnetization is large after the diffusion. For a region with a small thin film thickness, a concentration of the heavy rare earth element at a position that is in the permanent magnet with stable magnetization is small after the diffusion. Similarly, on the first face and the second face, for a region with a large concentration of the heavy rare earth element before the diffusion, a concentration of the heavy rare earth element at a corresponding position that is in the permanent magnet with stable magnetization and that corresponds to the region is correspondingly large after the diffusion. On the contrary , for a region with a small concentration of the heavy rare earth element before the diffusion, a concentration of the heavy rare earth element at a corresponding position that is in the permanent magnet with stable magnetization and that corresponds to the region is correspondingly small after the diffusion. For example, in a case similar to that shown in FIG. 6 in which the thin film is thick at two sides and then the thin film thickness decreases along a gradient, or in a case similar to that shown in FIG. 7 in which a concentration of the heavy rare earth element is large at two sides in the thin film on each of the first face and the second face and then the concentration of the heavy rare earth element decreases along a gradient, for a concentration of the heavy rare earth element in the permanent magnet with stable magnetization after the diffusion, reference may be made to FIG. 8, to facilitate understanding. As shown in FIG. 8, on any parallel face that is in the permanent magnet with stable magnetization and that is in parallel to the first face 20 and the second face 30, a concentration of the heavy rare earth element also varies in a tendency of a gradient decrease followed by a gradient increase from one end to the other end (which may also be referred to as from a left side to a right side) of the permanent magnet along a direction of a length L1. This is consistent with an arrangement tendency of the thin film thicknesses in a magnetic stabilization process, or consistent with variation tendencies of concentrations of the heavy rare earth element in the thin films on the first face and the second face in the magnetic stabilization process.

In this embodiment of this application, in a magnetic stabilization process of the permanent magnet, in the first-face thin film and the second-face thin film, different regions have different thin film thicknesses or different concentrations of the heavy rare earth element. In the permanent magnet with stable magnetization obtained after thin film diffusion, concentrations of the heavy rare earth element in different regions correspond to the thin film thicknesses or the concentrations of the heavy rare earth element on the first face and the second face. A coercivity of the permanent magnet with stable magnetization corresponds to the concentration of the heavy rare earth element in the permanent magnet with stable magnetization. In this way, in this application, on a premise that the permanent magnet with stable magnetization meets different requirements on resistance to demagnetization at different positions, it is unnecessary to form thin films including the heavy rare earth element on all faces. This further reduces a usage amount of the heavy rare earth element and reduces costs of the permanent magnet with stable magnetization. In addition, a permanent magnet with stable magnetization with varying concentration distribution can be obtained by controlling thin film thicknesses or concentrations of the heavy rare earth element on the first face and the second face, thereby implementing on-demand customization of the permanent magnet with stable magnetization.

It should be noted that in this embodiment of this application, different thin film thicknesses or different concentrations of the heavy rare earth element may include "different from each other" or may include "not exactly the same". "Not exactly the same" means that thin film thicknesses of some regions may be the same. For example, in FIG. 3, thin film thicknesses in symmetric regions at two ends of the first face 20 along the direction of the length L1 may be the same. Similarly, alternatively, concentrations of the heavy rare earth element in symmetric regions at two ends of the first face 20 along the direction of the length L1 may be the same.

Optionally, on the first face, the thin film thickness of the first-face thin film first decreases and then increases from one end to the other end of the first face along the first direction.

The first-face thin film usually has a uniform concentration of the heavy rare earth element. That the thin film thickness first decreases and then increases in different regions may be a gradient decrease with a uniform scale followed by a gradient increase with a uniform scale, or may be a continuous decrease followed by a continuous increase. A turning point from the decrease to the increase is usually a center line of the first face. This can be construed as follows: The thin film thickness assumes a gradient decrease tendency from one end of the first face to the center line, and the thin film thickness assumes a gradient increase tendency from the center line to the other end of the first face. When the second-face thin film is formed on the second face, the thin film thickness on the second face and the thin film thickness on the first face are basically the same in terms of variation tendency, and are also basically the same in the terms of variation position and variation amplitude. In this way, after the first-face thin film and the second-face thin film are diffused to form the permanent magnet with stable magnetization, a concentration of the heavy rare earth element in any parallel face that is in the permanent magnet with stable magnetization and that is in parallel to the first face and the second face is higher on two sides and lower in the middle. Corresponding to the concentration of the heavy rare earth element, a coercivity is also larger on the two sides and smaller in the middle. This can exactly meet a manufacturing requirement that the permanent magnet with stable magnetization lias a larger coercivity in an edge region and a smaller coercivity in a central region. For this solution, reference may be made to content corresponding to FIG. 3, FIG. 4, and FIG. 6, to facilitate understanding.

Optionally, on the first face, the concentration of the heavy rare earth element in the first-face thin film first decreases and then increases from one end to the other end of the first face along the first direction.

The first-face thin film may have a uniform thin film thickness, but concentrations of the heavy rare earth element are different in different regions of the first-face thin film. That the concentration of the heavy rare earth element first decreases and then increases in different regions of the first-face thin film may be a gradient decrease with a uniform scale followed by a gradient increase with a uniform scale, or may be a continuous decrease followed by a continuous increase. A turning point from the decrease to the increase is usually a center line of the first face. This can be construed as follows: The concentration of the heavy rare earth element assumes a gradient decrease tendency from one end of the first face to the center line, and the concentration of the heavy rare earth element assumes a gradient increase tendency from the center line to the other end of the first face. When the second-face thin film is formed on the second face, the concentration of the heavy rare earth element on the second face and the concentration of the heavy rare earth element on the first face are basically the same in terms of variation tendency, and are also basically the same in terms of variation position and variation amplitude. In this way, after the first-face thin film and the second-face thin film are diffused to form the permanent magnet with stable magnetization, a concentration of the heavy rare earth element in any parallel face that is in the permanent magnet with stable magnetization and that is in parallel to the first face and the second face is higher on two sides and lower in the middle. Corresponding to the concentration of the heavy rare earth element, a coercivity is also larger on the two sides and smaller in the middle. This can exactly meet a manufacturing requirement that the permanent magnet with stable magnetization has a larger coercivity in an edge region and a smaller coercivity in a central region. For this solution, reference may be made to content corresponding to FIG. 5 and FIG. 7, to facilitate understanding.

Optionally, a distance between the first face and the second face is H, and H ≤ 10 millimeters. Preferably, H ≤ 5 millimeters. A height in the magnetization direction is limited to a specific range, to help the heavy rare earth element to diffuse into a center of the permanent magnet substrate.

A thin film thickness corresponds to a concentration of the heavy rare earth element in the permanent magnet with stable magnetization after the diffusion. In other words, for a region with a large thin film thickness, a concentration of the heavy rare earth element at a position that is in the permanent magnet with stable magnetization is large after the diffusion. For a region with a small thin film thickness, a concentration of the heavy rare earth element at a position that is in the permanent magnet with stable magnetization is small after the diffusion. A relationship between a thin film thickness and a concentration of the heavy rare earth element in the permanent magnet with stable magnetization after the diffusion may be understood from the following two experiments.

### First experiment:

The heavy rare earth element is a Tb element. In the magnetic stabilization process of the permanent magnet substrate, a chemical coating method is used to coat different regions with thin films of different thicknesses in a manner shown in FIG. 6 by using slurry including the Tb element, so that thin films of different thicknesses are formed on each of the first face and the second face. Before diffusion processing of the Tb element is performed, data in a first column and a second column in Table 1 is recorded. Then, diffusion processing of the Tb element is performed, to obtain the permanent magnet with stable magnetization shown in FIG. 8. In the slurry, an average granularity of terbium fluoride powder may be 5 micrometers, a weight of ethyl acetate may be 3 times that of the terbium fluoride powder, and a concentration of a glue may be 10 wt%.

It should be noted that in this experiment scenario, dimensions of the permanent magnet with stable magnetization are as follows: L1 = 23.5 mm, L2 = 28.7 mm, and H = 3.2 mm. After the permanent magnet with stable magnetization is obtained, a parallel face parallel to the first face and the second face may be obtained through sectioning. The parallel face may have a specific thickness, for example, 0.5 mm. After the parallel face is obtained through sectioning, percentages by weight (wt%) of the Tb element at seven sampling points are measured based on positions indicated by the data in the first column, to obtain data in the third column in Table 1.

**Table 1: Experimental data of the Tb element**

| Distance to a left end of L1/Millimeters (mm) | Thin film thickness/µm (Before diffusion) | Content of the Tb element (wt%) (After diffusion) |
|---|---|---|
| 1 | 200 | 1.21 |
| 2 | 50 | 0.33 |
| 5 | 20 | 0.12 |
| 11.75 | 10 | 0.07 |
| 18.5 | 20 | 0.11 |
| 21.5 | 50 | 0.29 |
| 22.5 | 200 | 1.19 |

In the seven sampling points in Table 1, a sampling point at 11.75 mm is located at a position on a center line of the parallel face. Corresponding to eight regions in FIG. 8, the sampling point is located in two regions in the middle. Three sampling points at 1 mm, 2 mm, and 5 mm are respectively located in first three regions on the left of the center line. Three sampling points at 18.5 mm, 21.5 mm, and 22.5 mm are respectively located in last three regions on the right of the center line.

It can be learned from the data in the second column in Table 1 that starting from a left end of the length (L1), the thin film thickness first decreases and then increases on each of the first face and the second face. After the diffusion, a concentration of the Tb element in the permanent magnet with stable magnetization also first decreases and then increases. The thin film thickness basically assumes a tendency of a gradient decrease followed by a gradient increase from left to right along the L1 direction. The concentration of the Tb element in the permanent magnet with stable magnetization also basically assumes a tendency of a gradient decrease followed by a gradient increase.

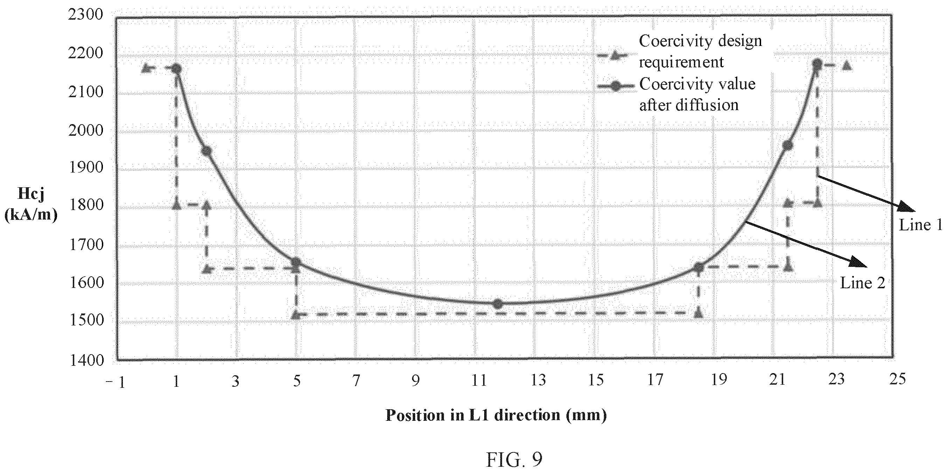

The variation tendency of the concentration of the Tb element in the permanent magnet with stable magnetization also reflects a variation tendency of a coercivity of the permanent magnet with stable magnetization. Therefore, a permanent magnet with stable magnetization can be customized based on a requirement on a coercivity. As shown in FIG. 9, a customized requirement on a coercivity may be represented by a line 1. An actual result, measured in an experiment, of a variation tendency of a coercivity of a permanent magnet with stable magnetization obtained by using the magnetic stabilization method may be represented by a line 2. It can be learned that an experimental test result of the permanent magnet with stable magnetization obtained by using the magnetic stabilization method basically meets the customized requirement. In this way, the magnetic stabilization process can be performed on the permanent magnet substrate based on a customized requirement, to obtain a permanent magnet with stable magnetization that meets the customized requirement.

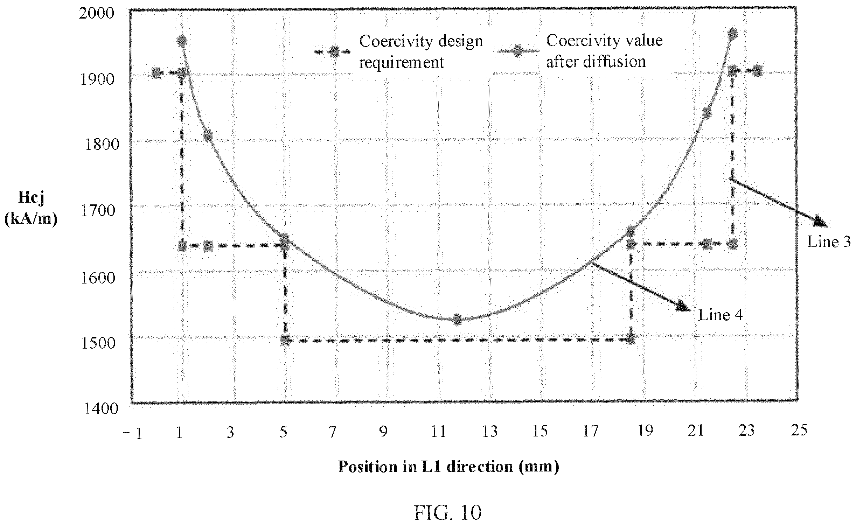

Table 1 and FIG. 9 reflect the experimental data of the Tb element. The following second experiment describes experimental data of a dysprosium (Dy) element by using Table 2 and FIG. 10.

### Second experiment:

The heavy rare earth element is the Dy element. In the magnetic stabilization process of the permanent magnet substrate, a chemical coating method is used to coat different regions with thin films of different thicknesses in a manner shown in FIG. 6 by using slurry including the Dy element, so that thin films of different thicknesses are formed on each of the first face and the second face. Before diffusion processing of the Dy element is performed, data in the first column and the second column in Table 2 is recorded. Then, diffusion processing of the Dy element is performed, to obtain the permanent magnet with stable magnetization shown in FIG. 8. In the slurry, an average granularity of dysprosium fluoride powder may be 5 micrometers, a weight of ethyl acetate may be 3.5 times that of the dysprosium fluoride powder, and a concentration of a glue may be 11 wt%.

It should be noted that in this experiment scenario, dimensions of the permanent magnet with stable magnetization are as follows: L1 = 23.5 mm, L2 = 28.7 mm, and H = 3.2 mm. After the permanent magnet witli stable magnetization is obtained, a parallel face parallel to the first face and the second face may be obtained through sectioning. The parallel face may have a specific thickness, for example, 0.5 mm. After the parallel face is obtained through sectioning, percentages by weight (wt%) of the Dy element at seven sampling points are measured based on positions indicated by the data in the first column, to obtain data in the third column in Table 2.

**Table 2: Experimental data of the Dy element**

| Distance to a left end of L1/Millimeters (mm) | Thin film thickness/µm (Before diffusion) | Content of the Dy element (wt%) (After diffusion) |
|---|---|---|
| 1 | 180 | 0.75 |
| 2 | 90 | 0.39 |
| 5 | 50 | 0.21 |
| 11.75 | 30 | 0.09 |
| 18.5 | 50 | 0.21 |
| 21.5 | 90 | 0.41 |
| 22.5 | 180 | 0.78 |

In the seven sampling points in Table 2, a sampling point at 11.75 mm is located at a position on a center line of the parallel face. Corresponding to eight regions in FIG. 8, the sampling point is located in two regions in the middle. Three sampling points at 1 mm, 2 mm, and 5 mm are respectively located in first three regions on the left of the center line. Three sampling points at 18.5 mm, 21.5 mm, and 22.5 mm are respectively located in last three regions on the right of the center line.

It can be learned from the data in the second column in Table 2 that starting from a left end of the length (L1), the thin film thickness first decreases and then increases on each of the first face and the second face. After the diffusion, a concentration of the Dy element in the permanent magnet with stable magnetization also first decreases and then increases. The thin film thickness basically assumes a tendency of a gradient decrease followed by a gradient increase from left to right along the L1 direction. The concentration of the Dy element in the permanent magnet with stable magnetization also basically assumes a tendency of a gradient decrease followed by a gradient increase.

The variation tendency of the concentration of the Dy element in the permanent magnet with stable magnetization also reflects a variation tendency of a coercivity of the permanent magnet with stable magnetization. Therefore, a permanent magnet with stable magnetization can be customized based on a requirement on a coercivity. As shown in FIG. 10, a customized requirement on a coercivity may be represented by a line 3. An actual result, measured in an experiment, of a variation tendency of a coercivity of a permanent magnet with stable magnetization obtained by using the magnetic stabilization method may be represented by a line 4. It can be learned that an experimental test result of the permanent magnet with stable magnetization obtained by using the magnetic stabilization method basically meets the customized requirement. In this way, the magnetic stabilization process can be performed on the permanent magnet substrate based on a customized requirement, to obtain a permanent magnet with stable magnetization that meets the customized requirement.

An embodiment of this application further provides a permanent magnet with stable magnetization. The permanent magnet with stable magnetization has one magnetization direction. The permanent magnet with stable magnetization includes a heavy rare earth element. The heavy rare earth element is dispersed in the permanent magnet with stable magnetization and has a varying concentration along a direction perpendicular to the magnetization direction.

The permanent magnet with stable magnetization may include a plurality of faces. The plurality of faces include a first face and a second face. The first face and the second face are opposite faces perpendicular to the magnetization direction. Usually, in the permanent magnet with stable magnetization, any parallel face parallel to the first face and the second face has a varying concentration of the heavy rare earth element.

Optionally, in the permanent magnet with stable magnetization, the concentration of the heavy rare earth element first decreases and then increases along the direction perpendicular to the magnetization direction. This can also be construed as follows: On any parallel face, a concentration of the heavy rare earth element first decreases and then increases from one end to the other end of the parallel face along a first direction. The first direction is a direction, on the parallel face, perpendicular to the magnetization direction.

Optionally, the permanent magnet with stable magnetization a lower concentration of the heavy rare earth element in a middle portion than in a periphery.

Optionally, the heavy rare earth element includes at least one of a dysprosium Dy element or a terbium Tb element.

Optionally, the heavy rare earth element includes at least one of a Dy element or a terbium Tb element and at least one of the following elements: copper Cu, cobalt Co, aluminum Al, calcium Ga, niobium Nb, titanium Ti, vanadium V, molybdenum Mo, or silicon Si.

Optionally, a distance between the first face and the second face is H, and H ≤ 10 millimeters. Preferably, H ≤ 5 millimeters. A height in the magnetization direction is limited to a specific range, to help the heavy rare earth element to diffuse into a center of a substrate.

The permanent magnet with stable magnetization may be a permanent magnet with stable magnetization obtained by using the magnetic stabilization method for a permanent magnet. For a structure and a feature of the permanent magnet with stable magnetization, reference may be made to FIG. 8 and the experimental data in Table 1 and Table 2 in the foregoing embodiment, to facilitate understanding. Details are not described herein again.

An embodiment of this application further provides a permanent magnet motor. The permanent magnet motor includes a rotor and a stator. The rotor includes a rotor core and a permanent magnet with stable magnetization that is inserted into a slot of the rotor core. The permanent magnet with stable magnetization is a permanent magnet that has a corresponding magnetic stabilization feature and that is manufactured by using the magnetic stabilization method.

It can be learned from the foregoing descriptions that in the embodiments of this application, a thin film that is distributed continuously or discontinuously is formed along a single direction (for example, a length direction or a width direction of a cuboid substrate) in a surface perpendicular to a magnetization direction. After diffusion, continuous concentration distribution of heavy rare earth is formed in a cross section perpendicular to the magnetization direction, to enhance a coercivity gradient and meet an application requirement.

In addition, a price of a permanent magnet with stable magnetization is directly related to content of a heavy rare earth element in a permanent magnet substrate. In the embodiments of this application, diffusion may be performed on a substrate with zero heavy rare earth elements, to enhance coercivities at an edge of a magnet and at a center of the magnet to different degrees. This can meet different requirements on resistance to demagnetization at different positions of the magnet while reducing costs of the permanent magnet substrate.

Moreover, in the embodiments of this application, a thin film thickness or a concentration of a heavy rare earth element on a surface of a permanent magnet substrate can be precisely designed based on requirements of a motor for coercivities at different positions in each permanent magnet segment of a rotor. After heat diffusion processing, concentration distribution of heavy rare earth and coercivity distribution that meet design requirements make full use of magnetic performance of a permanent magnetic material.

The magnetic stabilization method for a permanent magnet, the permanent magnet with stable magnetization, and the permanent magnet motor provided in the embodiments of this application are described in detail above. The principle and implementation of this application are described herein by using specific examples and limited by the scope of the appended claims.

## Claims

1. A magnetic stabilization method for a permanent magnet, comprising
providing (101) a permanent magnet substrate, wherein the permanent magnet substrate comprises a plurality of faces and one magnetization direction (10), the plurality of faces comprise a first face (20), and the first face (20) is perpendicular to the magnetization direction (10);
providing (102) a magnetic stabilization material, wherein the magnetic stabilization material comprises a heavy rare earth element; and
processing (103) the magnetic stabilization material on the first face (20) to form a first-face thin film, wherein the first-face thin film has a varying concentration of the heavy rare earth element in distribution along a first direction (40), and the first direction (40) is a direction perpendicular to the magnetization direction (10); and performing (104) diffusion processing of the heavy rare earth element on the permanent magnet substrate on which the thin film is formed on the first face (20),
wherein the plurality of faces further comprise a second face (30), the second face (30) is perpendicular to the magnetization direction (10), and the second face (30) and the first face (20) are respectively located on two opposite sides of the permanent magnet substrate; and the magnetic stabilization method further comprises:
processing the magnetic stabilization material on the second face (30) to form a second-face thin film, wherein the second-face thin film has a varying concentration of the heavy rare earth element in distribution along the first direction (40); and performing diffusion processing of the heavy rare earth element on the permanent magnet substrate on which the thin film is formed on the second face (30), and
**characterized in that**:
concentrations of the heavy rare earth element at opposite positions on the first face and the second face correspond to each other in terms of variation tendency.

2. The magnetic stabilization method according to claim 1, wherein on the first face (20), the concentration of the heavy rare earth element in the first-face thin film first decreases and then increases from one end to the other end of the first face (20) along the first direction (40).

3. The magnetic stabilization method according to any one of claims 1 to 2, wherein on the first face (20), the first-face thin film is divided into a plurality of thin film regions based on the concentration of the heavy rare earth element, wherein the plurality of thin film regions have different concentrations of the heavy rare earth element.

4. The magnetic stabilization method according to any one of claims 1 to 3, wherein along the first direction (40), the first-face thin film has a lower concentration of the heavy rare earth element in the middle portion than in the regions at the two ends.

5. The magnetic stabilization method according to claim 1, wherein a concentration variation of the second-face thin film in the distribution along the first direction (40) is consistent with or the same as a concentration variation of the first-face thin film in the distribution along the first direction (40).

6. The magnetic stabilization method according to claim 1 or 5, wherein a distance between the first face (20) and the second face (30) is H, and H ≤ 10 millimeters.

7. The magnetic stabilization method according to any one of claims 1 to 6, wherein content of the heavy rare earth element in the permanent magnet substrate is zero.

8. The magnetic stabilization method according to any one of claims 1 to 7, wherein the magnetic stabilization material is a pure metal, and the pure metal comprises at least one of a dysprosium Dy element or a terbium Tb element.

9. The magnetic stabilization method according to any one of claims 1 to 7, wherein the magnetic stabilization material is an alloy, and the alloy comprises at least one of a dysprosium Dy element or a terbium Tb element and at least one of the following elements: copper Cu, cobalt Co, aluminum Al, calcium Ca, niobium Nb, titanium Ti, vanadium V, molybdenum Mo, or silicon Si.

10. The magnetic stabilization method according to any one of claims 1 to 6, wherein the magnetic stabilization material is slurry, and the slurry comprises at least one of a compound comprising a dysprosium element or a compound comprising a terbium element, and an organic solvent;
the compound comprising the dysprosium element comprises at least one of dysprosium fluoride, dysprosium oxide, or dysprosium hydride; and
the compound comprising the terbium element comprises at least one of terbium fluoride, terbium oxide, or terbium hydride.

11. A permanent magnet with stable magnetization, wherein the permanent magnet with stable magnetization has one magnetization direction (10), the permanent magnet with stable magnetization comprises a heavy rare earth element, and the heavy rare earth element is dispersed in the permanent magnet with stable magnetization and has a varying concentration along a direction (40) perpendicular to the magnetization direction (10),
wherein the permanent magnet with stable magnetization has a first face (20) and a second face (30) that are perpendicular to the magnetization direction (10), the first face (20) and the second face (30) are respectively located on two opposite sides of the permanent magnet with stable magnetization, a distance between the first face (20) and the second face (30) is H, and H ≤ 10 millimeters,
wherein the heavy rare earth element being dispersed in the permanent magnet with stable magnetization and having a varying concentration along a direction perpendicular to the magnetization direction (10) comprises: the heavy rare earth element being dispersed on the first face (20) and the second face (30), and having the varying concentration along the direction perpendicular to the magnetization direction (10), and
**characterized in that**:
concentrations of the heavy rare earth element at opposite positions on the first face (20) and the second face (30) correspond to each other in terms of variation tendency.

12. The permanent magnet with stable magnetization according to claim 11, wherein in the permanent magnet with stable magnetization, the concentration of the heavy rare earth element first decreases and then increases along the direction perpendicular to the magnetization direction (10).

13. The permanent magnet with stable magnetization according to claim 11 or 12, wherein along the direction perpendicular to the magnetization direction (10), the permanent magnet with stable magnetization has a lower concentration of the heavy rare earth element in a middle portion than in regions at two ends.

14. The permanent magnet with stable magnetization according to any one of claims 11 to 13, wherein the heavy rare earth element comprises at least one of a dysprosium Dy element or a terbium Tb element.

15. The permanent magnet with stable magnetization according to any one of claims 11 to 13, wherein the heavy rare earth element comprises at least one of a Dy element or a terbium Tb element and at least one of the following elements: copper Cu, cobalt Co, aluminum Al, calcium Ga, niobium Nb, titanium Ti, vanadium V, molybdenum Mo, or silicon Si.

16. A permanent magnet motor, comprising a rotor and a stator, wherein
the rotor comprises a rotor core and a permanent magnet with stable magnetization that is inserted into a slot of the rotor core, and the permanent magnet with stable magnetization is the permanent magnet with stable magnetization according to any one of claims 11 to 15.

## Patentansprüche

1. Magnetisches Stabilisierungsverfahren für einen Permanentmagneten, das Folgendes umfasst:
Bereitstellen (101) eines Permanentmagnetsubstrats, wobei das Permanentmagnetsubstrat eine Vielzahl von Flächen und eine Magnetisierungsrichtung (10) umfasst, die Vielzahl von Flächen eine erste Fläche (20) umfassen und die erste Fläche (20) senkrecht zur Magnetisierungsrichtung (10) verläuft;
Bereitstellen (102) eines magnetischen Stabilisierungsmaterials, wobei das magnetische Stabilisierungsmaterial ein schweres Seltenerdeelement umfasst, und
Verarbeiten (103) des magnetischen Stabilisierungsmaterials auf der ersten Fläche (20), um einen Dünnfilm auf der ersten Fläche zu bilden, wobei der Dünnfilm der ersten Fläche in Verteilung entlang einer ersten Richtung (40) eine variierende Konzentration des schweren Seltenerdeelements aufweist und die erste Richtung (40) eine Richtung senkrecht zur Magnetisierungsrichtung (10) ist; und Durchführen (104) einer Diffusionsverarbeitung des schweren Seltenerdeelements auf dem Permanentmagnetsubstrat, auf dem der Dünnfilm auf der ersten Fläche (20) gebildet ist,
wobei die Vielzahl von Flächen ferner eine zweite Fläche (30) umfassen, die zweite Fläche (30) senkrecht zur Magnetisierungsrichtung (10) verläuft und die zweite Fläche (30) und die erste Fläche (20) sich auf zwei gegenüberliegenden Seiten des Permanentmagnetsubstrats befinden und das magnetische Stabilisierungsverfahren ferner Folgendes umfasst:
Verarbeiten des magnetischen Stabilisierungsmaterials auf der zweiten Fläche (30), um einen Dünnfilm auf der zweiten Fläche zu bilden, wobei der Dünnfilm der zweiten Fläche in Verteilung entlang der ersten Richtung (40) eine variierende Konzentration des schweren Seltenerdeelements aufweist, und Durchführen einer Diffusionsverarbeitung des schweren Seltenerdeelements auf dem Permanentmagnetsubstrat, auf dem der Dünnfilm auf der zweiten Fläche (30) gebildet ist, und
**dadurch gekennzeichnet, dass**:
Konzentrationen des schweren Seltenerdeelements in gegenüberliegenden Positionen auf der ersten Fläche und der zweiten Fläche einander hinsichtlich einer Variationstendenz entsprechen.

2. Magnetisches Stabilisierungsverfahren nach Anspruch 1, wobei die Konzentration des schweren Seltenerdeelements im Dünnfilm der ersten Fläche auf der ersten Fläche (20) von einem Ende zum anderen Ende der ersten Fläche (20) entlang der ersten Richtung (40) zuerst abnimmt und dann zunimmt.

3. Magnetisches Stabilisierungsverfahren nach einem der Ansprüche 1 bis 2, wobei der Dünnfilm der ersten Fläche auf der ersten Fläche (20) auf Basis der Konzentration des schweren Seltenerdeelements in eine Vielzahl von Dünnfilmregionen geteilt ist, wobei die Vielzahl von Dünnfilmregionen verschiedene Konzentrationen des schweren Seltenerdeelements aufweisen.

4. Magnetisches Stabilisierungsverfahren nach einem der Ansprüche 1 bis 3, wobei der Dünnfilm der ersten Fläche entlang der ersten Richtung (40) im mittleren Abschnitt eine niedrigere Konzentration des schweren Seltenerdeelements aufweist als in den Regionen an den zwei Enden.

5. Magnetisches Stabilisierungsverfahren nach Anspruch 1, wobei eine Konzentrationsvariation des Dünnfilms der zweiten Fläche in der Verteilung entlang der ersten Richtung (40) mit einer Konzentrationsvariation des Dünnfilms der ersten Fläche in der Verteilung entlang der ersten Richtung (40) konsistent oder dieselbe wie diese ist.

6. Magnetisches Stabilisierungsverfahren nach Anspruch 1 oder 5, wobei ein Abstand zwischen der ersten Fläche (20) und der zweiten Fläche (30) H ist und H ≤ 10 Millimeter.

7. Magnetisches Stabilisierungsverfahren nach einem der Ansprüche 1 bis 6, wobei ein Gehalt des schweren Seltenerdeelements im Permanentmagnetsubstrat null ist.

8. Magnetisches Stabilisierungsverfahren nach einem der Ansprüche 1 bis 7, wobei das magnetische Stabilisierungsmaterial ein reines Metall ist und das reine Metall mindestens eines von einem Dysprosium(Dy)-Element oder einem Terbium(Tb)-Element ist.

9. Magnetisches Stabilisierungsverfahren nach einem der Ansprüche 1 bis 7, wobei das magnetische Stabilisierungsmaterial eine Legierung ist und die Legierung mindestens eines von einem Dysprosium(Dy)-Element oder einem Terbium(Tb)-Element und mindestens eines der folgenden Elemente umfasst: Kupfer Cu, Kobalt Co, Aluminium Al, Kalzium Ca, Niob Nb, Titan Ti, Vanadium V, Molybdän Mo oder Silizium Si.

10. Magnetisches Stabilisierungsverfahren nach einem der Ansprüche 1 bis 6, wobei das magnetische Stabilisierungsmaterial Schlamm ist und der Schlamm mindestens eines von einer Verbindung, die ein Dysprosiumelement umfasst, oder einer Verbindung, die ein Terbiumelement umfasst, und ein organisches Lösungsmittel umfasst,
die Verbindung, die das Dysprosiumelement umfasst, mindestens eines von einem Dysprosiumfluorid, einem Dysprosiumoxid oder einem Dysprosiumhydrid umfasst und
die Verbindung, die das Terbiumelement umfasst, mindestens eines von einem Terbiumfluorid, einem Terbiumoxid oder einem Terbiumhydrid umfasst.

11. Permanentmagnet mit stabiler Magnetisierung, wobei der Permanentmagnet mit stabiler Magnetisierung eine Magnetisierungsrichtung (10) aufweist, der Permanentmagnet mit stabiler Magnetisierung ein schweres Seltenerdeelement umfasst und das schwere Seltenerdeelement im Permanentmagneten mit stabiler Magnetisierung verteilt ist und entlang einer Richtung (40) senkrecht zur Magnetisierungsrichtung (10) eine variierende Konzentration aufweist,
wobei der Permanentmagnet mit stabiler Magnetisierung eine erste Fläche (20) und eine zweite Fläche (30) aufweist, die senkrecht zur Magnetisierungsrichtung (10) verlaufen, wobei sich die erste Fläche (20) und die zweite Fläche (30) jeweils auf zwei gegenüberliegenden Seiten des Permanentmagneten mit stabiler Magnetisierung befinden, ein Abstand zwischen der ersten Fläche (20) und der zweiten Fläche (30) H beträgt und H ≤ 10 Millimeter,
wobei das schwere Seltenerdeelement, das im Permanentmagneten mit stabiler Magnetisierung verteilt ist und entlang einer Richtung senkrecht zur Magnetisierungsrichtung (10) eine variierende Konzentration aufweist, Folgendes umfasst: das schwere Seltenerdeelement, das auf der ersten Fläche (20) und der zweiten Fläche (30) verteilt ist und entlang der Richtung senkrecht zur Magnetisierungsrichtung (10) die variierende Konzentration aufweist, und
**dadurch gekennzeichnet, dass**:
Konzentrationen des schweren Seltenerdeelements in gegenüberliegenden Positionen auf der ersten Fläche (20) und der zweiten Fläche (30) einander hinsichtlich einer Variationstendenz entsprechen.

12. Permanentmagnet mit stabiler Magnetisierung nach Anspruch 11, wobei die Konzentration des schweren Seltenerdeelements im Permanentmagneten mit stabiler Magnetisierung entlang der Richtung senkrecht zur Magnetisierungsrichtung (10) zuerst abnimmt und dann zunimmt.

13. Permanentmagnet mit stabiler Magnetisierung nach Anspruch 11 oder 12, wobei der Permanentmagnet mit stabiler Magnetisierung entlang der Richtung senkrecht zur Magnetisierungsrichtung (10) in einem mittleren Abschnitt eine niedrigere Konzentration des Seltenerdeelements aufweist als in Regionen an den zwei Enden.

14. Permanentmagnet mit stabiler Magnetisierung nach einem der Ansprüche 11 bis 13, wobei das schwere Seltenerdeelement mindestens eines von einem Dysprosium(Dy)-Element oder einem Terbium(Tb)-Element umfasst.

15. Permanentmagnet mit stabiler Magnetisierung nach einem der Ansprüche 11 bis 13, wobei das schwere Seltenerdeelement mindestens eines von einem Dy-Element oder einem Terbium(Tb)-Element und mindestens eines der folgenden Elemente umfasst: Kupfer Cu, Kobalt Co, Aluminium Al, Kalzium Ca, Niob Nb, Titan Ti, Vanadium V, Molybdän Mo oder Silizium Si.

16. Permanentmagnetmotor, der einen Rotor und einen Stator umfasst, wobei der Rotor einen Rotorkern und einen Permanentmagneten mit stabiler Magnetisierung, der in einem Schlitz des Rotorkerns eingesetzt ist, umfasst und der Permanentmagnet mit stabiler Magnetisierung der Permanentmagnet mit stabiler Magnetisierung nach einem der Ansprüche 11 bis 15 ist.

## Revendications

1. Procédé de stabilisation magnétique pour un aimant permanent, comprenant la fourniture (101) d'un substrat d'aimant permanent, dans lequel le substrat d'aimant permanent comprend une pluralité de faces et une seule direction de magnétisation (10), la pluralité de faces comprend une première face (20), et la première face (20) est perpendiculaire à la direction de magnétisation (10) ;
la fourniture (102) d'un matériau de stabilisation magnétique, dans lequel le matériau de stabilisation magnétique comprend un élément lourd des terres rares ; et
le traitement (103) du matériau de stabilisation magnétique sur la première face (20) pour former un film mince de première face, dans lequel le film mince de première face présente une concentration variable de l'élément lourd des terres rares selon une distribution suivant une première direction (40), et la première direction (40) est une direction perpendiculaire à la direction de magnétisation (10) ; et
la réalisation (104) d'un traitement de diffusion de l'élément lourd des terres rares sur le substrat d'aimant permanent sur lequel le film mince est formé sur la première face (20),
dans lequel la pluralité de faces comprend en outre une seconde face (30), la seconde face (30) est perpendiculaire à la direction de magnétisation (10), et la seconde face (30) et la première face (20) sont respectivement situées sur deux côtés opposés du substrat d'aimant permanent ; et le procédé de stabilisation magnétique comprend en outre :
le traitement du matériau de stabilisation magnétique sur la seconde face (30) pour former un film mince de seconde face, dans lequel le film mince de seconde face présente une concentration variable de l'élément lourd des terres rares selon une distribution suivant la première direction (40) ; et
la réalisation d'un traitement de diffusion de l'élément lourd des terres rares sur le substrat d'aimant permanent sur lequel le film mince est formé sur la seconde face (30), et
**caractérisé en ce que** :
des concentrations de l'élément lourd des terres rares en des positions opposées sur la première face et sur la seconde face correspondent l'une l'autre en matière de tendance de variation.

2. Procédé de stabilisation magnétique selon la revendication 1, dans lequel, sur la première face (20), la concentration de l'élément lourd des terres rares dans le film mince de première face diminue d'abord puis augmente d'une extrémité à l'autre extrémité de la première face (20) suivant la première direction (40).

3. Procédé de stabilisation magnétique selon l'une quelconque des revendications 1 et 2, dans lequel, sur la première face (20), le film mince de première face est divisé en une pluralité de régions de film mince sur la base de la concentration de l'élément lourd des terres rares, dans lequel la pluralité de régions de film mince présente des concentrations différentes de l'élément lourd des terres rares.

4. Procédé de stabilisation magnétique selon l'une quelconque des revendications 1 à 3, dans lequel, suivant la première direction (40), le film mince de première face présente une concentration de l'élément lourd des terres rares plus faible dans la partie centrale que dans les régions au niveau des deux extrémités.

5. Procédé de stabilisation magnétique selon la revendication 1, dans lequel une variation de concentration du film mince de seconde face selon la distribution suivant la première direction (40) est cohérente avec une variation de concentration du film mince de première face selon la distribution suivant la première direction (40) ou est la même que celle-ci.

6. Procédé de stabilisation magnétique selon la revendication 1 ou 5, dans lequel une distance entre la première face (20) et la seconde face (30) est H, et H ≤ 10 millimètres.

7. Procédé de stabilisation magnétique selon l'une quelconque des revendications 1 à 6, dans lequel la teneur de l'élément lourd des terres rares dans le substrat d'aimant permanent est de zéro.

8. Procédé de stabilisation magnétique selon l'une quelconque des revendications 1 à 7, dans lequel le matériau de stabilisation magnétique est un métal pur, et le métal pur comprend au moins un élément parmi un élément dysprosium Dy et un élément terbium Tb.

9. Procédé de stabilisation magnétique selon l'une quelconque des revendications 1 à 7, dans lequel le matériau de stabilisation magnétique est un alliage, et l'alliage comprend au moins un élément parmi un élément dysprosium Dy et un élément terbium Tb et au moins l'un des éléments qui suivent : le cuivre Cu, le cobalt Co, l'aluminium Al, le calcium Ca, le niobium Nb, le titane Ti, le vanadium V, le molybdène Mo et le silicium Si.

10. Procédé de stabilisation magnétique selon l'une quelconque des revendications 1 à 6, dans lequel le matériau de stabilisation magnétique est une bouillie, et la bouillie comprend au moins un composé parmi un composé qui comprend un élément dysprosium et un composé qui comprend un élément terbium, et un solvant organique ; le composé qui comprend l'élément dysprosium comprend au moins un élément parmi le fluorure de dysprosium, l'oxyde de dysprosium et l'hydrure de dysprosium ; et
le composé qui comprend l'élément terbium comprend au moins un élément parmi le fluorure de terbium, l'oxyde de terbium et l'hydrure de terbium.

11. Aimant permanent présentant une magnétisation stable, dans lequel l'aimant permanent présentant une magnétisation stable présente une seule direction de magnétisation (10), l'aimant permanent présentant une magnétisation stable comprend un élément lourd des terres rares, et l'élément lourd des terres rares est dispersé dans l'aimant permanent présentant une magnétisation stable et présente une concentration variable suivant une direction (40) perpendiculaire à la direction de magnétisation (10), dans lequel l'aimant permanent présentant une magnétisation stable comporte une première face (20) et une seconde face (30) qui sont perpendiculaires à la direction de magnétisation (10), la première face (20) et la seconde face (30) sont respectivement situées sur deux côtés opposés de l'aimant permanent présentant une magnétisation stable, une distance entre la première face (20) et la seconde face (30) est H, et H ≤ 10 millimètres,
dans lequel l'élément lourd des terres rares qui est dispersé dans l'aimant permanent présentant une magnétisation stable et qui présente une concentration variable suivant une direction perpendiculaire à la direction de magnétisation (10) comprend : l'élément lourd des terres rares qui est dispersé sur la première face (20) et sur la seconde face (30), et qui présente la concentration variable suivant la direction perpendiculaire à la direction de magnétisation (10), et
**caractérisé en ce que** :
des concentrations de l'élément lourd des terres rares en des positions opposées sur la première face (20) et sur la seconde face (30) correspondent l'une l'autre en matière de tendance de variation.

12. Aimant permanent présentant une magnétisation stable selon la revendication 11, dans lequel, dans l'aimant permanent présentant une magnétisation stable, la concentration de l'élément lourd des terres rares diminue d'abord puis augmente suivant la direction perpendiculaire à la direction de magnétisation (10).

13. Aimant permanent présentant une magnétisation stable selon la revendication 11 ou 12, dans lequel, suivant la direction perpendiculaire à la direction de magnétisation (10), l'aimant permanent présentant une magnétisation stable présente une concentration de l'élément lourd des terres rares plus faible dans la partie centrale que dans les régions au niveau des deux extrémités.

14. Aimant permanent présentant une magnétisation stable selon l'une quelconque des revendications 11 à 13, dans lequel l'élément lourd des terres rares comprend au moins un élément parmi un élément dysprosium Dy et un élément terbium Tb.

15. Aimant permanent présentant une magnétisation stable selon l'une quelconque des revendications 11 à 13, dans lequel l'élément lourd des terres rares comprend au moins un élément parmi un élément dysprosium Dy et un élément terbium Tb et au moins l'un des éléments qui suivent : le cuivre Cu, le cobalt Co, l'aluminium Al, le calcium Ca, le niobium Nb, le titane Ti, le vanadium V, le molybdène Mo et le silicium Si.

16. Moteur à aimant permanent, comprenant un rotor et un stator, dans lequel le rotor comprend un noyau de rotor et un aimant permanent présentant une magnétisation stable qui est inséré à l'intérieur d'une fente du noyau de rotor, et l'aimant permanent présentant une magnétisation stable est l'aimant permanent présentant une magnétisation stable selon l'une quelconque des revendications 11 à 15.
